# EUROPÄISCHE PATENTSCHRIFT

(11) **EP 2 812 684 B1**
(45) Veröffentlichungstag und Bekanntmachung des Hinweises auf die Patenterteilung: **12.04.2017**
(21) Anmeldenummer: 13700488.3
(22) Anmeldetag: 07.01.2013
(51) Int. Cl.: G01N 27/407, H01R 13/52, F01N 11/00, F16L 5/10, H02G 15/013

(54) **ABGASSENSOR UND HERSTELLUNGSVERFAHREN EINES ABGASSENSORS**
EXHAUST GAS SENSOR, AND METHOD FOR PRODUCING AN EXHAUST GAS SENSOR
CAPTEUR DE GAZ D'ÉCHAPPEMENT ET PRODUCTION D'UN CAPTEUR DE GAZ D'ÉCHAPPEMENT

(30) Priorität: 09.02.2012 DE 102012201900
(43) Veröffentlichungstag der Anmeldung: 17.12.2014
(73) Patentinhaber: Robert Bosch GmbH, 70442 Stuttgart (DE)
(72) Erfinder: RATTAY, Bernd, 71254 Ditzingen (DE); SCHNEIDER, Jens, 71229 Leonberg (DE); STANGLMEIER, Frank, 71735 Eberdingen-Hochdorf (DE)
(86) Internationale Anmeldenummer: PCT/EP2013/050141
(87) Internationale Veröffentlichungsnummer: WO 2013/117358

(56) Entgegenhaltungen:
- DE-A1- 4 034 072
- DE-A1-102005 020 793
- JP-A- 2001 103 645
- JP-A- 2001 242 128

## Beschreibung

### Stand der Technik

Die Erfindung geht aus von einem Abgassensor. Derartige Abgassensoren umfassen ein Gehäuse, in dem sich ein beispielsweise keramisches, elektrochemisch arbeitendes Sensorelement befindet. Derartige Abgassensoren umfassen ferner einen Stopfen, der das Gehäuse abdichtet und durch den mindestens ein Anschlusskabel aus dem Gehäuse heraus bzw. in das Gehäuse hineingeführt ist.

An diesen Stopfen und an das Zusammenwirken des Stopfens mit dem Anschlusskabel richtet sich zum einen die Anforderung einer hohen Dichtheit. Durch die hohe Dichtheit wird das Eindringen von schädlichen, beispielsweise Korrosion auslösenden, Flüssigkeiten und Gasen in das Innere des Abgassensors wirkungsvoll und dauerhaft unterbunden. Zur Realisierung der Dichtheit wird von dem Stopfen insbesondere gefordert, dass er über eine ausreichende Elastizität verfügt. Infolge der hohen Abgastemperaturen, den der Abgassensor ausgesetzt ist, kommen für den Stopfen andererseits nur Materialien mit einer entsprechend hohen Temperaturbeständigkeit in Frage.

Aus der DE 10 2005 020 793 A1 ist bereits bekannt, einen Stopfen aus dem auch als PTFE bekannten Polytetrafluorethylen zum Verschließen des Gehäuses eines Abgassensors vorzusehen. Es wird ferner vorgeschlagen, in Durchgangskanälen dieses Stopfens Isoliermäntel von Anschlusskabeln mittels fluorhaltigen Kunststoffs zu verschweißen. Weitere Abgassensoren sind aus der JP 2001 242128 A und der JP 2001 103 645 A bekannt.

Vorteil der Erfindung Erfindungsgemäß ist ein Abgassensor gemäß Anspruch 1, der einen Stopfen aufweist, vorgesehen.

Erfindungsgemäß weist der Stopfen einen Grundkörper auf, der Polytetrafluorethylen (PTFE) aufweist. Wenngleich der Begriff "Grundkörper" in Zusammenhang mit dieser Erfindung nicht übermäßig einschränkend zu verstehen ist, ist doch bevorzugt, dass der Grundkörper des Stopfens die Gestalt oder Grundgestalt eines geraden Kreiszylinders hat oder dieser ähnlich ist oder von dieser ausgeht. Beispielsweise können hierbei ausgehend von der Gestalt oder der Grundgestalt Anfasungen, Abrundungen und/oder ähnliches vorgenommen sein und/oder Deformationen, beispielsweise plastischer und/oder elastischer Art, vorgenommen sein.

Unter Polytetrafluorethylen (PTFE) versteht sich hierbei insbesondere die chemische Substanz mit der Strukturformel [-CF2-CF2-]n.

Da der Grundkörper des Stopfens erfindungsgemäß Polytetrafluorethylen (PTFE) aufweist, also ein Material mit hervorragender Temperaturbeständigkeit, ist es vorteilhaft, wenn der Grundkörper überwiegend zur Masse und/oder zum Volumen des Stopfens beiträgt. Insbesondere kann es vorteilhaft sein, wenn der Grundkörper mindestens 80% oder mindestens 85%, bevorzugt sogar mindestens 90% oder mindestens 95%, der Masse des Stopfens ausmacht. Zusätzlich oder alternativ kann es auch vorteilhaft sein, wenn der Grundkörper mindestens 65% oder mindestens 72%, bevorzugt sogar mindestens 79% oder mindestens 86%, des Volumens des Stopfens ausmacht.

Wenngleich der Grundkörper auch nur hinsichtlich eines räumlichen Teils und/oder hinsichtlich seiner chemischen Zusammensetzung nur zu einem gewissen Anteil Polytetrafluorethylen (PTFE) aufweisen kann, ist doch bevorzugt, dass der Grundkörper zu mindestens 95% oder ganz aus Polytetrafluorethylen (PTFE) besteht und/oder dass der Grundkörper aus Polytetrafluorethylen (PTFE) besteht.

Erfindungsgemäß weist der Stopfen mindestens einen, insbesondere axialen, Durchgangskanal zur Hindurchführung mindestens eines Anschlusskabels auf. Unter einem axialen Durchgangskanal versteht sich beispielsweise bezogen auf eine zylindrische oder zylinderähnliche Gestalt oder Grundgestalt des Grundkörpers, dass der Durchgangskanal die beiden gegenüberliegenden Stirnflächen des Stopfens durchstößt und/oder dass der Durchgangskanal die insbesondere radial außen liegende Mantelfläche des Stopfens nicht durchstößt. Wenngleich die Erfindung nicht darauf eingeschränkt ist, ist es doch bevorzugt, dass der Durchgangskanal parallel zu einer Symmetrieachse des Grundkörpers verläuft oder eine Symmetrieachse des Grundkörpers sogar mit einer Symmetrieachse des Durchgangskanals zusammenfällt. Auch die Anordnung von mehreren, insbesondere von zwei, drei, vier, fünf oder sechs, Durchgangskanälen ist möglich, wobei diese vorzugsweise symmetrisch um eine Symmetrieachse des Grundkörpers herum angeordnet sind. Wenngleich die Anordnung genau eines Anschlusskabels pro Durchgangskanal bevorzugt ist, ist es grundsätzlich auch möglich, in einem Durchgangskanal mehrere Anschlusskabel oder einen, beispielsweise verklebten und/oder verschweißten, Verbund von Anschlusskabeln, der mehrere Anschlusskabel umfasst, vorzusehen.

Erfindungsgemäß umfasst der Stopfen eine Dichtung, die zwischen dem Grundkörper des Stopfens und dem Durchgangskanal zumindest stellenweise angeordnet ist. Diese Dichtung ist bevorzugt geeignet, einen zwischen dem Grundkörper des Stopfens und dem Durchgangskanal verbleibenden Spalt zu schließen, insbesondere abzudichten. Wenngleich es möglich und auch bevorzugt ist, dass die Dichtung die Innenkontur des Stopfens, also die Außenwand des Durchgangskanals auskleidet, insbesondere überwiegend oder vollständig auskleidet, ist es auch möglich und bevorzugt, dass die Dichtung zwischen Grundkörper und Durchgangskanal nur stellenweise angeordnet ist, also Teile der Innenkontur des Stopfens und der Außenwand des Durchgangskanals offen zueinander verbleiben.

Der Erfindung liegt die Erkenntnis zugrunde, dass zur Realisierung einer verbesserten Dichtwirkung im Bereich der Dichtung der Auswahl des Materials der Dichtung eine besondere Bedeutung zukommt. Es wurde insbesondere erkannt, dass der Grundkörper aufgrund des Materials, das er aufweist oder aus dem er sogar besteht, Polytetrafluorethylen (PTFE), zwar eine hohe Temperaturbeständigkeit aber nur in geringem Umfang elastische Eigenschaften aufweist und somit wenig geeignet ist, eine Kraft bzw. einen Spannungszustand zu übertragen. Eine abdichtende Wirkung auf Basis eines Kraftschlusses ist also nur schwer bzw. unvollkommen erzielbar. Auf dieser Erkenntnis basierend, wurde überdies erkannt, dass die Suche nach geeigneten Materialien für die Dichtung auf solche Materialien zu fokussieren ist, die geeignet sind, sich stoffschlüssig mit Polytetrafluorethylen (PTFE) zu verbinden, das heißt insbesondere geeignet, den Stoff Polytetrafluorethylen (PTFE) zu benetzen.

Erfindungsgemäß und basierend auf obengenannten Erkenntnissen wurden in Untersuchungen der Anmelderin die Stoffe Perfluoralkoxypolymer (PFA) und Tetrafluorethylenperfluorproylen (FEP) als geeignet identifiziert. Ebenfalls als geeignet wurden die Stoffe Polychlortriflourethylen (PCTFE) und Polyvinylidenflourid (PVDF) identifiziert. Die Stoffe Polychlortriflourethylen (PCTFE) und Polyvinylidenflourid (PVDF) sind aufgrund ihrer im Vergleich zu Perfluoralkoxypolymer (PFA) und Tetrafluorethylenperfluorproylen (FEP) etwas geringeren Temperaturbeständigkeit allerdings insbesondere nur zur Verwendung bei geringeren Einsatztemperaturen (zum Beispiel für Einsatztemperaturen unterhalb von 210°C) vorzusehen. Die Verwendung von Perfluoralkoxypolymer (PFA) und/oder Tetrafluorethylenperfluorproylen (FEP) ist insbesondere für hohe Einsatztemperaturen (zum Beispiel für Einsatztemperaturen von bis zu 280°C oder sogar bis zu 305°C) die vorzuziehende Lösung.

Wenngleich es bevorzugt ist, dass die Dichtung aus Perfluoralkoxypolymer (PFA) oder Tetrafluorethylenperfluorproylen (FEP) oder Polychlortriflourethylen (PCTFE) oder Polyvinylidenflourid (PVDF) oder einer Mischung dieser Substanzen besteht oder zumindest zu 95% oder ganz aus Perfluoralkoxypolymer (PFA) oder Tetrafluorethylenperfluorproylen (FEP) oder Polychlortriflourethylen (PCTFE) oder Polyvinylidenflourid (PVDF) oder einer Mischung dieser Substanzen besteht, so sind von der Erfindung grundsätzlich auch Dichtungen umfasst, die nur einen Teil aufweisen, der aus diesen Stoffen besteht, oder die aus einem Material bestehen, das nur einen, insbesondere überwiegenden, Anteil von Perfluoralkoxypolymer (PFA) und/oder Tetrafluorethylenperfluorproylen (FEP) und/oder Polychlortriflourethylen (PCTFE) und/oder Polyvinylidenflourid (PVDF) aufweist.

Unter Tetrafluorethylenperfluorproylen (FEP) versteht sich hierbei insbesondere die chemische Substanz mit der Strukturformel [-CF2-CF2-CF(CF3)-CF2-]n. Unter Tetrafluorethylenperfluorproylen (FEP) verstehen sich hierbei insbesondere chemische Substanzen, die durch Polymerisation von Gemischen des Monomers Tetrafluorethylen (TFE) mit einem von Null verschiedenen, insbesondere von Null wesentlich verschiedenen, Anteil des Monomers Hexafluorpropylen (HFP) herstellbar sind.

Unter Perfluoralkoxypolymeren (PFA) verstehen sich hierbei insbesondere chemische Substanzen, die durch Polymerisation von Gemischen des Monomers Tetrafluorethylen (TFE) mit einem von Null verschiedenen, insbesondere von Null wesentlich verschiedenen, Anteil des Monomers Perfluorpropylvinylether (PPVE) herstellbar sind. Unter Perfluoralkoxypolymeren (PFA) verstehen sich hierbei insbesondere chemische Substanzen mit der Strukturformel [-CF2-CF2-CF(OR)-CF2-]n, wobei die Seitengruppe OR mindestens eine Alkoxygruppe ist. Insbesondere handelt es sich um vollfluorierte Polymere mit zumindest einer Alkoxy-Seitenkette. Perfluoralkoxypolymeren (PFA) sind insbesondere chemische Substanzen, die thermoplastisch verarbeitbar sind, keramische, oxidische, Glas-, und/oder Metalloberflächen benetzen können und/oder mit Polytetrafluorethylen (PTFE) verschmelzbar sind. Es sind von der Erfindung insbesondere verschiedene PFA-Qualitäten und/oder Mischungen aus verschiedenen PFA-Qualitäten, sogenannte PFA-Polyblends, umfasst. Besonders positive Erfahrungen im Zusammenhang mit der vorliegenden Erfindung liegen der Anmelderin mit der Verwendung von PFA-Polyblends vor, deren Schmelzbereich zwischen 260°C bis 320°C liegt, insbesondere von 260°C bis 320°C reicht. Bevorzugt sind Polymere mit einer Molmasse von 3*10^5 bis 3*^10^6 g/mol.

Unter Polychlortriflourethylen (PCTFE) versteht sich hierbei insbesondere die chemische Substanz mit der Strukturformel [-CFCI-CF2-]n.

Unter Polyvinylidenflourid (PVDF) versteht sich hierbei insbesondere die chemische Substanz mit der Strukturformel [-CH2-CF2-]n.

Die Temperaturstabilität der für die Dichtung vorgesehenen Materialien, insbesondere Perfluoralkoxypolymer (PFA) und Tetrafluorethylenperfluorproylen (FEP) und Polychlortriflourethylen (PCTFE) und Polyvinylidenflourid (PVDF), ist zwar relativ hoch, liegt aber dennoch spürbar unter der Temperaturstabilität des für den Grundkörper vorgesehen Materials Polytetrafluorethylen (PFTE). Aus diesem Grund kann es vorteilhaft sein, wenn die Dichtung und/oder das Material, aus dem die Dichtung besteht, nur zu einem geringen Maß zur Masse und/oder zum Volumen des Stopfens beitragen. Insbesondere kann es vorteilhaft sein, wenn die Dichtung und/oder das Material, aus dem die Dichtung besteht, höchstens 20% oder höchstens 15%, bevorzugt sogar höchstens 10% oder höchstens 5%, der Masse des Stopfens ausmacht. Zusätzlich oder alternativ kann es auch vorteilhaft sein, wenn die Dichtung und/oder das Material, aus dem die Dichtung besteht, höchstens 20% oder höchstens 15%, bevorzugt sogar höchstens 10% oder höchstens 5% des Volumens des Stopfens ausmacht. Auch Dichtungen, deren Volumen weniger als 35% oder weniger als 25%, bevorzugt weniger als 15% des Volumens des zugehörigen Durchgangskanals ausmachen, sind bevorzugt. Durch die genannten Maßnahmen wird die Temperaturstabilität des Stopfens insgesamt optimiert.

Insbesondere ist es möglich, dass die Dichtung auf dem Grundkörper in Form einer zum Durchgangskanal weisenden Schicht angeordnet ist, wobei sich insbesondere Schichtdicken von mindestens 10µm, bevorzugt mindestens 50µm, bewährt haben, da so eine prozesssichere Ausbildung der Dichtschicht gewährleistet ist. Eine Schichtdicke die hierbei nicht überschritten werden sollte, beträgt 1mm, bevorzugt 250µm. In besonders temperaturkritischen Anwendungen kann auch eine Schichtdicke zwischen 50µm und 150µm bevorzugt sein, insbesondere wenn eine Schwankung der tatsächlichen Schichtdicke von 20%, bevorzugt von 15%, nicht überschritten wird.

Grundsätzlich ist es möglich und von der Erfindung umfasst, dass eine stoffschlüssige Verbindung zwischen der Dichtung und dem Grundkörper werkseitig noch nicht herbeigeführt oder noch nicht vollständig herbeigeführt ist und insbesondere im Betrieb des Sensors, zum Beispiel durch eine Eigenbeheizung des Sensors und/oder in Folge der Beaufschlagung des Abgassensors mit heißem Abgas, ausbildbar oder vollständig ausbildbar ist. In einer vorteilhaften Ausführungsform der Erfindung wird das Zustandekommen dieses Stoffschlusses jedoch bereits im Fertigungsprozess integriert, sodass dann ein Stopfen bzw. ein Abgassensor vorliegt, bei dem der Grundkörper mit der Dichtung ganz oder teilweise stoffschlüssig verbunden ist und bei dem eine optimierte Dichtwirkung bereits zu Beginn des vorgesehenen Betriebs des Sensors vorliegt.

Bei einer stoffschlüssigen Verbindung handelt es sich um eine Verbindung, bei der ein Zusammenhalt der Fügepartner durch die auf molekularer Ebene wirksam werdenden Kräfte erfolgt, so wie es insbesondere auch in der VDI-Richtlinie 2232-2004-01 definiert ist. Beispiele für stoffschlüssige Verbindungen sind Verschweißungen, Verklebungen, Verschmelzungen usw. Bei der stoffschlüssigen Verbindung kann es sich insbesondere um eine unmittelbare stoffschlüssige Verbindung zwischen zwei Fügepartnern handeln, bei der es zu einer unmittelbaren Wechselwirkung zwischen den beiden Fügepartnern auf molekularer Ebene kommt. Bei der stoffschlüssigen Verbindung kann es sich andererseits insbesondere auch um eine mittelbare stoffschlüssige Verbindung handeln, bei der die beiden Fügepartner nicht unmittelbar stoffschlüssig miteinander verbunden sind, sondern jeweils mit zumindest einem dritten Fügepartner unmittelbar stoffschlüssig verbunden sind und im Fall mehrerer dritter Fügepartner alle diese dritten Fügepartner (mittelbar oder unmittelbar) stoffschlüssig miteinander verbunden sind.

Der Stopfen wird zur Abdichtung eines Gehäuses eines Abgassensors nach Anspruch 1 verwendet, wobei der Stopfen einen Grundkörper aufweist, der Polytetrafluorethylen aufweist, wobei der Stopfen mindestens einen, insbesondere axialen, Durchgangskanal aufweist, durch den ein elektrischer Leiter hindurchgeführt ist, wobei zwischen dem Grundkörper des Stopfens und dem Durchgangskanal zumindest stellenweise eine isolierende Dichtung angeordnet ist, die zumindest einseitig, also insbesondere auf mindestens einer Stirnseite des Stopfens, zusammen mit dem elektrischen Leiter aus dem Stopfen herausgeführt ist, wobei die isolierende Dichtung mindestens ein Perfluoralkoxypolymer oder ein Tetrafluorethylenperfluorproylen oder ein Polychlortriflourethylen oder ein Polyvinylidenflourid aufweist. Hierbei liegt die Isolierende Dichtung dem elektrischen Leiter und dem Grundkörper insbesondere unmittelbar gegenüber und ist mit dem elektrischen Leiter und/oder mit dem Grundkörper, insbesondere innerhalb des Durchgangskanals, insbesondere stoffschlüssig, verbunden oder verbindbar, insbesondere verschweißbar. Weiterbildungen dieses Gegenstandes mit einem oder mehreren der in den Ansprüchen und/oder der Beschreibung dieser Erfindung, insbesondere im Zusammenhang mit den anderen Ausführungsbeispielen, offenbarten Merkmalen sind möglich. Insbesondere ist es stets auch möglich, die Dichtung des Stopfens und die Isolierung des Anschlusskabels als ein einziges Teil auszuführen.

Der Stopfen weist einen, insbesondere axialen, Durchgangskanal zur Hindurchführung eines Anschlusskabels auf. Dies bedeutet, dass der Durchgangskanal grundsätzlich derart beschaffen ist, dass ein Anschlusskabel durch den Stopfen hindurchgeführt werden kann, bevorzugt durch den Stopfen aus dem Inneren des Gehäuses in einen außerhalb des Gehäuses liegenden Bereich geführt werden kann.

Der Stopfen des Abgassensorgehäuses umfasst ein Anschlusskabel, das durch den Stopfen hindurchgeführt ist, bevorzugt durch den Stopfen aus dem Inneren des Gehäuses in einen außerhalb des Gehäuses liegenden Bereich geführt ist.

Unter einem Abgassensor ist vorliegend insbesondere eine Lambdasonde zum Einsatz im Abgastrakt einer Brennkraftmaschine zu verstehen, jedoch kann es sich auch um andere Sensoren, wie einen Temperatursensor oder um einen NOx- oder Russpartikelsensor oder dergleichen handeln. Es sind insbesondere alle Sensoren von der Erfindung umfasst, die für einen Dauereinsatz bei hohen Temperaturen und/oder in aggressiver Umgebung geeignet sind, und solche Sensoren, bei denen eine beispielsweise elektrische Anschlussleitung aus einem abzudichtenden Gehäuse, insbesondere bei vergleichsweise hohen Umgebungstemperaturen, herauszuführen ist.

Es ist bevorzugt, dass durch die Vorsehung der erfindungsgemäßen Maßnahmen eine anschlussseitige Dichtheit des Gehäuses des Abgassensors resultiert, die vergleichsweise hoch ist, beispielsweise eine Heliumdichtheit von weniger als 10^-3 mbar*l/s oder 10^-4 mbar*l/s, bevorzugt sogar eine Heliumdichtheit von weniger als 10^-5 mbar*l/s oder 10^-6 mbar*l/s. Andererseits sind die Begriffe "Dichtung", "abgedichtet" etc. auch nicht zu eng auszulegen, sodass insbesondere auch ein lediglich makroskopischer Verschluss umfasst sein kann. Auch eine eventuell verbleibende Leckage durch das Innere einer schlauchförmigen Isolation des Anschlusskabels oder der Anschlusskabel bleibt vorliegend außer Betracht, da diese Leckage an anderer Stelle, zum Beispiel an einem mit dem Anschlusskabel und den Anschlusskabeln verbundenen Stecker, abgedichtet werden kann. Auch die Herausleitung einer solchen Leckage durch das Anschlusskabel oder durch die Anschlusskabel in einen unkritischen Bereich, beispielsweise einen kälteren und weniger exponierten Bereich eines Kraftfahrzeuges, ist vorsehbar. Eine absolute oder hermetische Dichtheit (insbesondere eine Heliumdichtheit von weniger als 10^-10 mbar*l/s) ist zwar grundsätzlich möglich, aber mit Ausnahme von speziellen Anwendungen gleichsam kostenprohibitiv.

Zur Erzielung einer vergleichsweise hohen Dichtheit des Gehäuses ist es insbesondere bevorzugt, dass das Anschlusskabel mit der Dichtung stoffschlüssig verbunden ist. Insbesondere umfasst das Anschlusskabel einen von einer Isolation umgebenen elektrischen Leiter und der Stoffschluss zwischen Dichtung und Anschlusskabel ist zwischen Dichtung und der Isolation des Anschlusskabels ausgebildet. Die Isolation des Anschlusskabels kann insbesondere ein Fluorpolymer, zum Beispiel Polytetrafluorethylen (PTFE), aufweisen oder aus Polytetrafluorethylen (PTFE) bestehen, insbesondere ganz, überwiegend oder teilweise aus Polytetrafluorethylen (PTFE) bestehen. Zur Optimierung der Dichtheit und der Temperaturbeständigkeit ist es besonders bevorzugt, wenn die Isolation des Anschlusskabels aus dem gleichen Material wie der Grundkörper des Stopfens, zum Beispiel aus Polytetrafluorethylen (PTFE), besteht.

Der elektrische Leiter des Anschlusskabels ist vorteilhafterweise durch Cu- und/oder Cu-Stahllitzen gegeben.

Bevorzugte Weiterbildungen der Erfindung resultieren daraus, dass der Grundgedanke der Abdichtung zwischen Grundkörper des Stopfens und Anschlussleitung durch Vorsehung der erfindungsgemäßen Dichtung auf die Abdichtung zwischen dem Grundkörper des Stopfens und dem Gehäuse des Sensors übertragen wird.

So kann als eine Weiterbildung vorgesehen sein, dass der Stopfen eine Außendichtung aufweist, die radial außen am Stopfen angeordnet ist, wobei die Außendichtung mindestens ein Perfluoralkoxypolymer (PFA) oder ein Tetrafluorethylenperfluorproylen (FEP) oder ein Polychlortriflourethylen (PCTFE) oder ein Polyvinylidenflourid (PVDF) aufweist. Zusätzlich kann der Grundkörper mit der Außendichtung stoffschlüssig verbunden sein. Zusätzlich oder alternativ kann die Außendichtung auf dem Grundkörper in Form einer Schicht angeordnet sein, vorzugsweise mit einer Schichtdicke von 10µm bis 1mm, besonders vorzugsweise von 50µm bis 250µm. Zusätzlich oder alternativ kann vorgesehen sein, dass das Gehäuse des Abgassensors mit dem Stopfen durch die Außendichtung stoffschlüssig verbunden ist.

Es kann insbesondere vorgesehen sein, dass für die Außendichtung und für die Dichtung das gleiche Material vorgesehen ist, also insbesondere ein Material gleicher chemischer Zusammensetzung. Auch die für die Dichtung und für die Außendichtung vorgesehenen Schichtdicken können übereinstimmen.

Zur Erzielung einer vergleichsweise hohen Dichtheit des Gehäuses ist es insbesondere bevorzugt, dass das Anschlusskabel, der Stopfen und das Gehäuse stoffschlüssig miteinander verbunden sind, also insbesondere ein Stoffschluss zwischen dem Gehäuse und dem Stopfen und ein Stoffschluss dem Stopfen und dem Anschlusskabel, insbesondere zwischen dem Stopfen und einer Isolation des Anschlusskabels, realisiert ist. Insbesondere ist eine insgesamt stoffschlüssige Abdichtung des anschlussseitigen Endes des Gehäuses des Abgassensors realisiert.

Erfindungsgemäße Verfahren zur Herstellung eines Stopfens, insbesondere eines erfindungsgemäßen Abgassensors nach Ansprüchen 1-6, sehen vor, dass ein Grundkörper mit mindestens einem, insbesondere axialen, Durchgangskanal, der Polytetrafluorethylen (PTFE) aufweist, insbesondere aus Polytetrafluorethylen (PTFE) besteht, bereitgestellt wird. Ferner ist vorgesehen, dass ein Anschlusskabel, das radial außen ein Dichtmaterial aufweist, das mindestens ein Perfluoralkoxypolymer (PFA) oder ein Tetrafluorethylenperfluorproylen (FEP) oder ein Polychlortriflourethylen (PCTFE) oder ein Polyvinylidenflourid (PVDF) aufweist, bereitgestellt wird. Insbesondere kann ein Anschlusskabel bereitgestellt werden, das einen elektrischen Leiter aufweist, der von einer Isolation umgeben ist, die insbesondere ein Fluorpolymer, zum Beispiel Polytetrafluorethylen (PTFE), aufweist oder zum Beispiel aus Polytetrafluorethylen (PTFE) besteht, wobei zusätzlich, auf dieser Isolation, radial außen das Dichtmaterial angeordnet ist, das mindestens ein Perfluoralkoxypolymer (PFA) oder ein Tetrafluorethylenperfluorproylen (FEP) oder ein Polychlortriflourethylen (PCTFE) oder ein Polyvinylidenflourid (PVDF) aufweist. Ferner ist vorgesehen, dass das Anschlusskabel durch den insbesondere axialen Durchgangskanal des Grundkörpers geführt wird, sodass das Dichtmaterial in den Durchgangskanal gelangt.

Bei dem Dichtmaterial kann es sich insbesondere um mindestens einen Schlauch handeln, insbesondere einen Schlauch, der auf das Anschlusskabel aufschoben, aufgezogen oder auf das Anschlusskabel abgerollt wird. Die Länge des Schlauches in axialer Richtung ist bevorzugt größer als sein Durchmesser. Bevorzugt sind Schläuche mit einer Wandstärke von 10µm bis 1mm, besonders bevorzugt mit einer Wandstärke von 50 - 250µm.

Bei dem Dichtmaterial kann es sich andererseits auch um mindestens eine Folie handeln, insbesondere eine Folie, die auf bzw. um das Anschlusskabel gewickelt wird. Bevorzugt sind Folien mit einer Wandstärke von 10µm bis 1mm, bevorzugt mit einer Wandstärke von 50 - 250µm.

Das Dichtmaterial kann anderseits auch eine ringförmige Gestalt haben. Das Dichtmaterial kann dann insbesondere auf das Anschlusskabel aufgeschoben oder auf dem Anschlusskabel in die vorgesehene Position gerollt werden. Die Länge des Ringes in axialer Richtung ist bevorzugt gleich oder geringer als sein Durchmesser. Bevorzugt sind Ringe mit einer Wandstärke von 10µm bis 1mm, besonders bevorzugt mit einer Wandstärke von 50 - 250µm.

Das Dichtmaterial kann grundsätzlich auch auf andere Art und Weise eingebracht werden. Beispielsweise kann es in flüssigem Zustand auf das Anschlusskabel bzw. in den Durchgangskanal eingespritzt werden.

Es ist insbesondere vorgesehen, dass der Verbund aus Grundkörper, Dichtmaterial und Anschlusskabel werkseitig erhitzt wird. Hierbei kommt es insbesondere zu einem Anschmelzen des Dichtmaterials und nachfolgend insbesondere zu einer stoffschlüssigen Verbindung zwischen Grundkörper, Dichtmaterial und Anschlusskabel. Alternativ ist es möglich, dass die Erhitzung des Verbundes aus Grundkörper, Dichtmaterial und Anschlusskabel nicht werkseitig, sondern insbesondere erst bei der Inbetriebnahme des Sensors erfolgt. Auch hierbei kann dann eine stoffschlüssige Verbindung zwischen Grundkörper, Dichtmaterial und Anschlusskabel resultieren.

Eine Erhitzung auf 285°C bis 310°C ist bevorzugt, wobei überdies bevorzugt ist, dass eine Erhitzung auf höhere Temperaturen unterbleibt. Insbesondere unterbleibt eine Erhitzung des Stopfens auf mehr als 327°C.

Es ist insbesondere vorgesehen, dass der Verbund aus Grundkörper, Dichtmaterial und Anschlusskabel verstemmt wird, insbesondere durch einen von außen angelegten Druck von 700 bis 2000 N/cm^2. Das Verstemmen kann insbesondere gleichzeitig mit dem Erhitzen erfolgen. Insbesondere kann die Ausbildung einer stoffschlüssigen Verbindung zwischen Grundkörper, Dichtmaterial und Anschlusskabel während des Verstemmens erfolgen.

Bevorzugte Weiterbildungen und Alternativen des erfindungsgemäßen Herstellungsverfahrens resultieren daraus, dass der Grundgedanke der Abdichtung zwischen Grundkörper des Stopfens und Anschlussleitung durch Vorsehung der erfindungsgemäßen Dichtung auf die Abdichtung zwischen dem Grundkörper des Stopfens und dem Gehäuse des Sensors übertragen wird.

So kann vorgesehen sein, dass neben der Dichtung zwischen dem Grundkörper des Stopfens und der Anschlussleitung auch die weiter oben erläuterte Außendichtung zwischen dem Grundkörper des Stopfens und dem Gehäuse des Abgassensors hergestellt wird. Hierfür wird ein Außendichtmaterial, das mindestens ein Perfluoralkoxypolymer oder ein Tetrafluorethylenperfluorproylen oder ein Polychlortriflourethylen oder ein Polyvinylidenflourid aufweist, zusammen mit dem Grundkörper so im Inneren des Gehäuses angeordnet, dass Außendichtmaterial zwischen dem Grundkörper und dem Gehäuse angeordnet ist.

Insbesondere wird ein Verbund aus Gehäuse, Außendichtung, Grundkörper, Dichtmaterial der Dichtung und Anschlusskabel hergestellt und der gesamte Verbund wird gemeinsam erhitzt und verstemmt, insbesondere durch einen von außen angelegten Druck von 700 bis 2000 N/cm^2.

Zusätzlich kann bei diesem Erhitzen vorgesehen sein, dass neben dem Dichtmaterial, insbesondere zugleich, auch das Außendichtmaterial zumindest teilweise aufschmilzt und sich nachfolgend eine stoffschlüssige Verbindung zwischen dem Grundkörper des Stopfens und dem Außendichtmaterial und dem Außendichtmaterial und dem Gehäuse des Abgassensors ausbildet.

Besonders vorteilhaft ist es, wenn das einzubringende Dichtmaterial mit dem einzubringenden Außendichtmaterial hinsichtlich seiner chemischen Zusammensetzung und seiner Handhabung übereinstimmt. Beispielsweise können Dichtmaterial und Außendichtmaterial beide in Form von 100µm bis 200µm dicken Schmelzfolien verarbeitet werden.

### Zeichnung

Beispiele und Ausführungsbeispiele der Erfindung sind in der Zeichnung dargestellt und in der nachfolgenden Beschreibung näher erläutert.

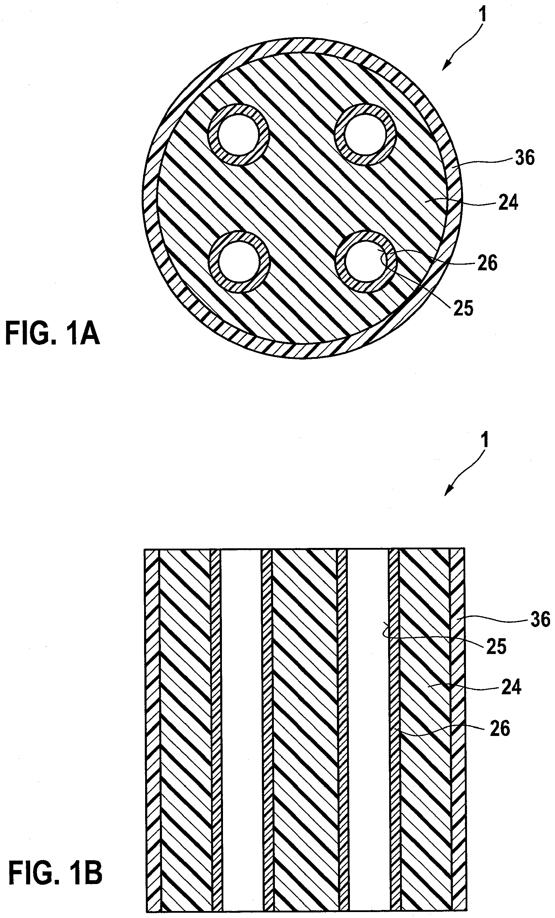

Stopfen sind in Figuren 1a und 1b, 2a und 2b, 3a und 3b und 4a und 4b jeweils in Aufsicht und entlang eines Schnittes entlang einer Längsachse des Stopfens dargestellt.

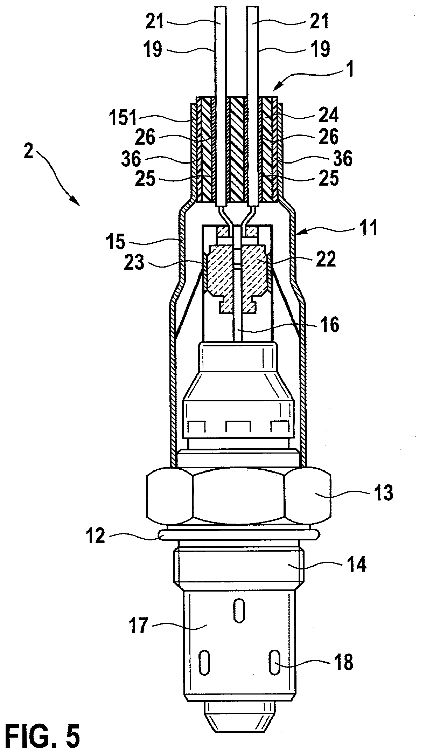

Ein erfindungsgemäßer Abgassensor ist in der Figur 5 dargestellt.

Beschreibung der Beispiele und Ausführungsbeispiele Die Figuren 1a und 1b zeigen ein erstes Beispiel eines Stopfens 1 in Aufsicht beziehungsweise in einem Schnitt entlang der Längsachse des Stopfens 1.

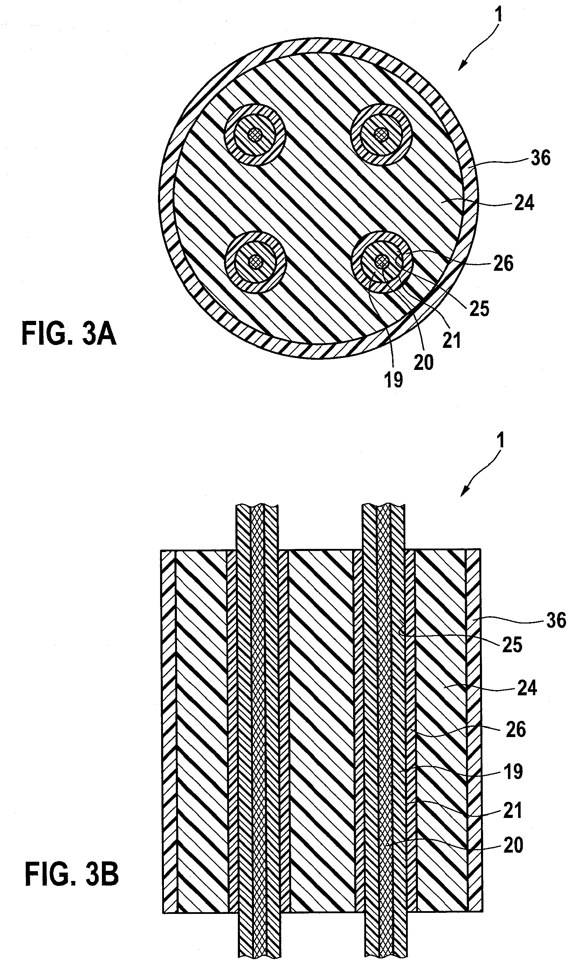

Der Stopfen 1 weist eine zylindrische Gestalt bzw. Grundgestalt auf, insbesondere die Gestalt bzw. Grundgestalt eines geraden Kreiszylinders. Ein radial innen angeordneter Grundkörper 24 hat ebenfalls eine zylindrische Gestalt bzw. Grundgestalt, insbesondere die Gestalt bzw. Grundgestalt eines geraden Kreiszylinders. Der Grundkörper 24 kann beispielsweise eine Länge von 15mm und einen Durchmesser von 10mm aufweisen. Der Stopfen 1 bzw. der Grundkörper 24 weisen beispielsweise vier axiale Durchgangskanäle 25 auf, die sich in Längsrichtung erstrecken und beispielsweise einen Durchmesser von 1mm haben. Die Durchgangskanäle 25 sind in diesem Beispiel eines Stopfens 1 offen und zur Hindurchführung jeweils eines Anschlusskabels 21 (siehe Figuren 3 bis 5) vorgesehen. Auf den Innenkonturen des Grundkörpers 24, also die Durchgangskanäle 25 nach radial außen begrenzend, ist jeweils eine Dichtung 26 ausgebildet, und zwar vollflächig in Form einer beispielsweise 100µm dicken Schicht. Radial außen, auf der Mantelfläche des Grundkörpers 24 ist eine Außendichtung 36 aufgebracht, ebenfalls vollflächig in Form einer beispielsweise 100µm dicken Schicht.

Der Grundkörper 24 besteht in diesem Beispiel aus Polytetrafluorethylen (PTFE) und macht über 95% des Volumens bzw. der Masse des Stopfens 1 aus, sodass eine sehr hohe thermische Stabilität des Stopfens 1 resultiert. Das Material der Dichtung 26 und der Außendichtung 36 ist in diesem Beispiel jeweils ein Perfluoralkoxypolymer (PFA) mit einem Schmelzbereich von 260°C - 320°C. Alternativ ist das Material der Dichtung 26 und der Außendichtung 36 eines der folgenden Materialien: Perfluoralkoxypolymer (PFA), Tetrafluorethylenperfluorproylen (FEP), Polychlortriflourethylen (PCTFE), Polyvinylidenflourid (PVDF). Auch andere Materialien, die die genannten Materialien nur teilweise aufweisen, und/oder Mischungen der genannten Materialien kommen grundsätzlich in Frage.

Es ist vorgesehen, dass durch den Stopfen 1 ein Gehäuse 11 eines Abgassensors 2 nach Anspruch 1 (siehe Figur 5) abdichtbar ist, wobei durch die Dichtung 26 der Grundkörper 24 des Stopfens 1 gegenüber einem Anschlusskabel 21 abdichtbar ist und wobei durch die Außendichtung 36 der Grundkörper 24 des Stopfens 1 gegenüber dem Gehäuse 11 des Abgassensors 2 abdichtbar ist.

Zur Verbesserung der Dichtwirkung der Dichtung 26 bzw. der Außendichtung 36 ist in diesem Beispiel vorgesehen, dass die Dichtung 26 und der Grundkörper 24 durch Verschmelzen stoffschlüssig miteinander verbunden sind und dass die Außendichtung 36 und der Grundkörper 24 durch Verschmelzen stoffschlüssig miteinander verbunden sind. Insbesondere ist vorgesehen, dass es beim Verschmelzen zu einem Schmelzen bzw. zu einem Anschmelzen des Materials der Dichtung 26 bzw. der Außendichtung 36 kommt. Insbesondere ist vorgesehen, dass es beim Verschmelzen nicht zu einem Schmelzen bzw. zu einem Anschmelzen bzw. zu einer chemischen Zersetzung des Materials des Grundkörpers 24 kommt.

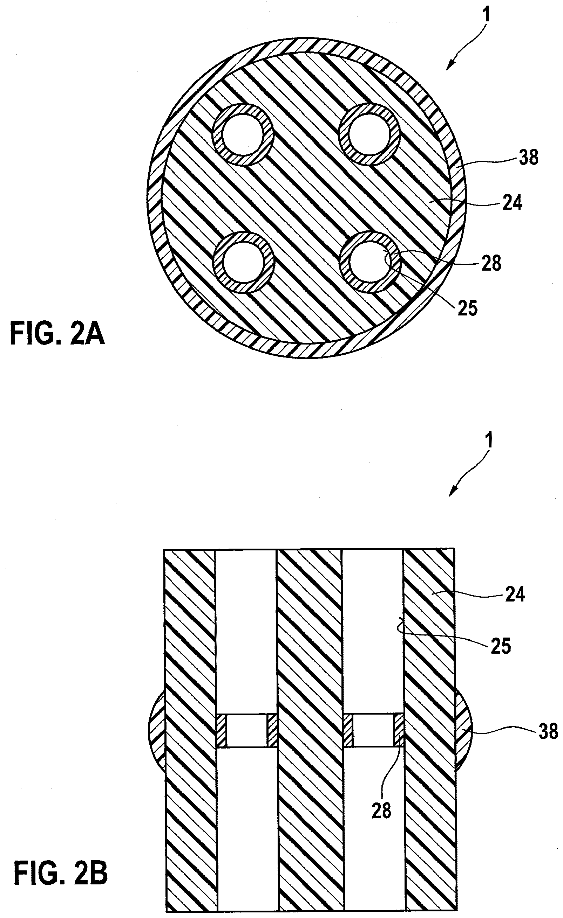

In den Figuren 2a und 2b ist ein zweites Beispiel eines Stopfens 1 in Aufsicht beziehungsweise in einem Schnitt längs der Längsachse des Stopfens 1 gezeigt.

Das zweite Beispiel unterscheidet sich von dem ersten Beispiel dadurch, dass die Dichtung 26 nicht als vollflächige Schicht auf der Innenkontur des Grundkörpers 24 ausgebildet ist, sondern als Dichtring 28 auf der Innenkontur des Grundkörpers angeordnet ist und diese in Längserstreckung nur zu einem Teil bedeckt. Der Dichtring 28 hat eine Länge (Längsrichtung des Durchgangskanals 25) von 1mm und eine Dicke (radiale Richtung) von 150 µm oder 250µm.

Das zweite Beispiel unterscheidet sich überdies von dem ersten Beispiel dadurch, dass die Außendichtung 36 nicht als vollflächige Schicht radial außen auf dem Grundkörper 24 ausgebildet ist, sondern als Außendichtring 38 radial außen auf dem Grundkörper 24 angeordnet ist und die Außenfläche des Grundkörpers 24 in Längserstreckung nur zu einem Teil bedeckt. Der Außendichtring 38 hat eine Länge (Längsrichtung des Grundkörpers 24) von 3mm und eine Dicke (radiale Richtung) von 250µm oder 600µm.

Der Dichtring 28 und der Außendichtring 38 sind in diesem Beispiel etwa mittig, insbesondere mittig, in Längsrichtung des Stopfens 1 angeordnet. In Alternativen des Ausführbeispiels kann auch vorgesehenen sein, dass der Dichtring 28 und/oder der Außendichtring 38 außermittig angeordnet sind. Insbesondere die Vorsehung von zwei Dichtringen 28 und/oder zwei Außendichtringen 38, die einander in Längsrichtung des Stopfens 1 gesehen gegenüberliegen, ist möglich. Auch die Vorsehung von noch mehr Dichtringen 28 und/oder Außendichtringen 38 ist grundsätzlich möglich.

In den Figuren 3a und 3b ist ein drittes Beispiel eines Stopfens 1 in Aufsicht beziehungsweise in einem Schnitt längs der Längsachse des Stopfens 1 gezeigt.

In Weiterbildung der Erfindung, zum Beispiel gemäß dem ersten oder zweiten Beispiel, handelt es sich hierbei um einen Stopfen 1, bei dem im Durchgangskanal 25 mindestens ein Anschlusskabel 21 angeordnet ist bzw. durch dessen Durchgangskanal 25 mindestens ein Anschlusskabel 21 hindurchgeführt ist, sodass der Stopfen insbesondere geeignet ist, das Gehäuse 11 eines Abgassensors 2 abzudichten.

Vorliegend besteht das Anschlusskabel 21 aus einem elektrischen Leiter 20, der insbesondere als Kupferlitze oder Stahl-Kupferlitze ausgebildet ist, wobei der elektrische Leiter 20 insbesondere von einer Isolation 19 umgeben ist, insbesondere entlang der gesamten Länge des Stopfens 1 von der Isolation 19 umgeben ist. Alternativ wäre es auch möglich, dass der elektrische Leiter 20 nur entlang eines Teiles des Stopfens 1 von der Isolation 19 umgeben ist, und entlang eines Teiles des Stopfens 1 der Dichtung 26 und/oder dem Dichtring 28 und/oder dem Grundkörper 24 des Stopfens 1 unmittelbar gegenüberliegt.

Es kann vorgesehen sein, dass das Anschlusskabel 21, insbesondere die Isolation 19, mit der Dichtung 26 und/oder dem Dichtring 28 stoffschlüssig verbunden ist, insbesondere verschmolzen ist, insbesondere durch Anschmelzen des für die Dichtung 26 oder den Dichtring 28 vorgesehenen Materials.

Alternativ kann aber auch vorgesehen sein, dass das Anschlusskabel 21, insbesondere die Isolation 19, nicht mit der Dichtung 26 und/oder dem Dichtring 28 stoffschlüssig verbunden ist, sondern lediglich, insbesondere kraftschlüssig, im Inneren der Dichtung 26 und/oder dem Dichtring 28 bzw. im Inneren des Grundkörpers 24 festgelegt ist. In diesem Fall ist es jedoch insbesondere bevorzugt, dass das Anschlusskabel 21, insbesondere die Isolation 19, mit der Dichtung 26 und/oder dem Dichtring 28 stoffschlüssig verbindbar, insbesondere verschweißbar, ist.

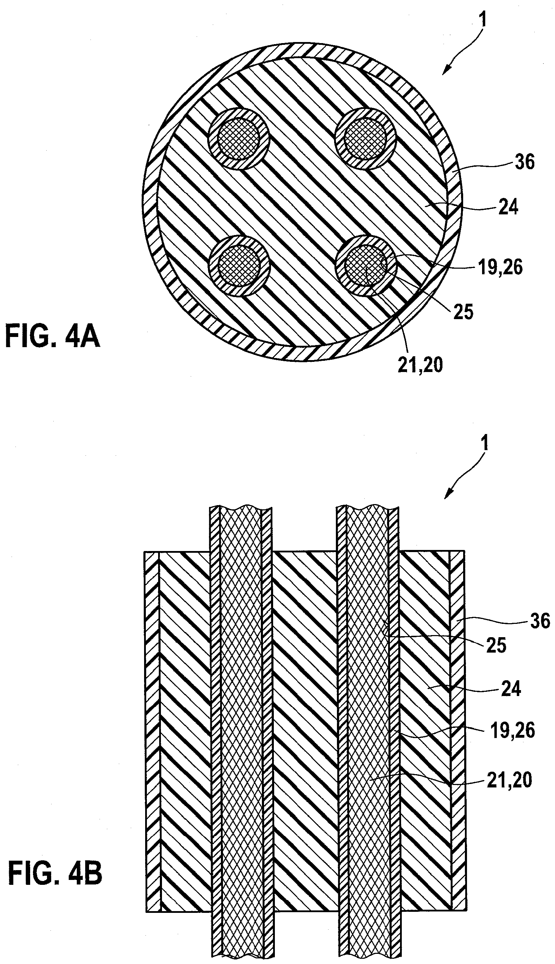

In den Figuren 4a und 4b ist ein viertes Beispiel eines Stopfens 1 in Aufsicht beziehungsweise in einem Schnitt längs der Längsachse des Stopfens 1 gezeigt.

In Weiterbildung der Erfindung, zum Beispiel gemäß dem ersten oder zweiten Ausführungsbeispiel, handelt es sich hierbei um einen Stopfen 1, bei dem im Durchgangskanal 25 mindestens ein Anschlusskabel 21 angeordnet ist bzw. durch dessen Durchgangskanal 25 mindestens ein Anschlusskabel 21 hindurchgeführt ist, sodass der Stopfen 1 insbesondere geeignet ist, das Gehäuse 11 eines Abgassensors 2 abzudichten.

Im Unterschied zum dritten Beispiel ist vorgesehen, dass die Isolation 19 des Anschlusskabels 21 und die Dichtung 26 nicht als voneinander verschiedene Teile ausgebildet sind, sondern die Dichtung 26 zugleich die Funktion der Isolation 19 des elektrischen Leiters 20 übernimmt und diesem, insbesondere unmittelbar, gegenüber liegt. Die Dichtung 26 bzw. die Isolation 19 ist in diesem Beispiel, insbesondere zweiseitig oder einseitig, zusammen mit dem elektrischen Leiter 20 aus dem Stopfen 1 herausgeführt und isoliert den elektrischen Leiter 20 des Anschlusskabels 21 auch außerhalb des Stopfens 1, beispielsweise bis hin zu einem (nicht gezeichneten) Teil einer Steckverbindung führt, zum Beispiel einem Stecker, der auf der dem Stopfen 1 gegenüberliegenden Seite des Anschlusskabels 21 mit dem Anschlusskabel 21 verbunden ist und der, beispielsweise mit einem zu einem Steuergerät gehörigen komplementären Teil der Steckverbindung, zum Beispiel einer Buchse, verbindbar, insbesondere zusammensteckbar, ist.

In diesem Beispiel ist die Isolation 19, die innerhalb des Stopfens 1 zugleich die Isolation 26 bildet, als eine 250µm dicke Schicht aus Perfluoralkoxypolymer (PFA) ausgebildet, die den elektrischen Leiter in Form eines Isolationsschlauches radial außen umgibt.

Es kann in diesem Beispiel vorgesehen sein, dass die Isolation 19, vorliegend also die Dichtung 26, mit dem Leiter 20 des Anschlusskabels 21 und/oder mit dem Grundkörper 24 des Stopfens 1 stoffschlüssig verbunden ist, insbesondere verschmolzen ist, insbesondere durch Anschmelzen des für die die Isolation 19, vorliegend also die Dichtung 26, vorgesehenen Materials.

Alternativ kann aber auch vorgesehen sein, dass die Isolation 19, vorliegend also die Dichtung 26, mit dem Leiter 20 des Anschlusskabels 21 und/oder mit dem Grundkörper 24 des Stopfens 1 nicht stoffschlüssig verbunden ist, sondern dass die Isolation 19, vorliegend also die Dichtung 26, mit dem Leiter 20 des Anschlusskabels 21 und/oder mit dem Grundkörper 24 des Stopfens 1 lediglich, insbesondere kraftschlüssig, festgelegt ist. In diesem Fall ist es jedoch insbesondere bevorzugt, dass die Isolation 19, vorliegend also die Dichtung 26, mit dem Leiter 20 des Anschlusskabels 21 und/oder mit dem Grundkörper 24 des Stopfens 1 stoffschlüssig verbindbar, insbesondere verschweißbar, ist.

In Alternativen des Ausführbeispiels kann auch vorgesehenen sein, dass die Isolation 19, die innerhalb des Stopfens 1 zugleich die Isolation 26 bildet, nicht aus Perfluoralkoxypolymer (PFA) besteht, sondern aus einem Material dass mindestens ein Perfluoralkoxypolymer (PFA) oder ein Tetrafluorethylenperfluorproylen (FEP) oder ein Polychlortriflourethylen (PCTFE) oder ein Polyvinylidenflourid (PVDF) aufweist, insbesondere aus solch einem Material, das elektrisch isolierend ist und bis oder oberhalb von 190°C temperaturbeständig ist.

Das vierte Beispiel ist insbesondere auch ein Beispiel für einen Stopfen 1 zur Abdichtung des Gehäuses 11 eines Abgassensor 2, wobei der Stopfen 1 einen Grundkörper 24 aufweist, der Polytetrafluorethylen aufweist, wobei der Stopfen 1 mindestens einen axialen Durchgangskanal 25 aufweist, durch den ein elektrischer Leiter 20 hindurchgeführt ist, wobei zwischen dem Grundkörper 24 des Stopfens 1 und dem Durchgangskanal 25 zumindest stellenweise eine isolierende Dichtung 26 angeordnet ist, die zumindest einseitig, also insbesondere auf einer Stirnseite des Stopfens 1, zusammen mit dem elektrischen Leiter 20 aus dem Stopfen 1 herausgeführt ist, wobei die isolierende Dichtung 26 mindestens ein Perfluoralkoxypolymer oder ein Tetrafluorethylenperfluorproylen oder ein Polychlortriflourethylen oder ein Polyvinylidenflourid aufweist. Hierbei liegt die Isolierende Dichtung 26 dem elektrischen Leiter 20 und dem Grundkörper 24 insbesondere unmittelbar gegenüber und ist insbesondere mit dem elektrischen Leiter 20 und/oder mit dem Grundkörper 24, insbesondere innerhalb des Durchgangskanals 25, insbesondere stoffschlüssig, verbunden oder verbindbar, insbesondere verschweißt oder verschweißbar.

Ausführbeispiele der Erfindung betreffen Abgassensoren 2 mit einem Stopfen 1, wie er beispielsweise vorangehend, insbesondere im ersten, zweiten, dritten und vierten Beispiel, näher dargestellt ist. Diese Abgassensoren 2 weisen jeweils mindestens ein Gehäuse 11 auf, das durch den Stopfen 1 abgedichtet ist und mindestens ein Anschusskabel 21, das durch den Durchgangskanal 25 des Stopfens 1 hindurchgeführt ist.

Als Ausführbeispiel der Erfindung ist in Figur 5 ein Abgassensor 2 gezeigt, dessen sich abgasseitig des Stopfens 1 befindlicher Teil aus dem Stand der Technik prinzipiell bekannt ist und beispielsweise als Teil einer Lambdasonde zur Messung der Sauerstoffkonzentration im Abgas von Brennkraftmaschinen konzipiert ist. Dieser Abgassensor 2 weist ein Gehäuse 11 auf, das aus einem massiven Gehäusekörper 12 aus Metall mit einem Schraubgewinde 14 und mit einem Montagesechskant 13 und einer auf den Gehäusekörper 12 aufgeschobenen und mit diesem fest verbundenen Schutzhülse 15 mit einem, beispielsweise im Durchmesser reduzierten, gehäusekörperfernen Endabschnitt 151 besteht. Im Gehäuse 11 ist beispielsweise ein Sensorelement 16 angeordnet, das mit einem messgasseitigen Ende aus dem Gehäuse 11 vorsteht und dort von einem Gasdurchtrittslöcher 18 aufweisenden Schutzrohr 17 überdeckt wird, das am Gehäusekörper 12 befestigt ist. An dem vom messgasseitigen Ende abgekehrten, anschlussseitigen Ende trägt das Sensorelement 16 Kontaktflächen, die über Leiterbahnen mit am messgasseitigen Ende angeordneten Messelektroden verbunden sind. Auf die Kontaktflächen sind die, beispielsweise mit einer Isolierung 19 umschlossenen, elektrischen Leiter 20 von Anschlusskabeln 21 kontaktiert. In diesem Ausführungsbeispiel ist zur Kontaktierung von Kontaktflächen und elektrischen Leitern 20 ein zweiteiliger, keramischer Klemmkörper 22 vorgesehen, der außen von einem Federelement 23 umschlossen ist und die elektrischen Leiter 20 kraftschlüssig auf die Kontaktflächen des Sensorelements 16 aufpresst. Der keramische Klemmkörper 22 ist an der Schutzhülse 15 radial abgestützt. Auch Alternativen dieses beispielhaft erläuterten, sich abgasseitig eines Stopfens 1 befindlichen Teils eines Abgassensors 2 sind grundsätzlich möglich und/oder ebenfalls aus dem Stand der Technik bekannt.

Es ist in den weiteren Ausführbeispielen vorgesehen, dass der Stopfen 1 das Gehäuse 11 verschließt beziehungsweise abdichtet, indem er in dem dem Gehäusekörper 12 abgewandten Teil der Schutzhülse 15, insbesondere in einem gehäusekörperfernen Endabschnitt 151 der Schutzhülse 15, angeordnet ist.

Bei dem Stopfen 1 kann es sich beispielsweise, wie in Figur 5 dargestellt, um den im Zusammenhang mit dem dritten Ausführungsbeispiel der Erfindung (Figur 3) erläuterten Stopfen 1 handeln. Alternativ kann es sich auch um einen Stopfen 1 handeln, wie er im Zusammenhang mit dem ersten, zweiten und/oder vierten Ausführungsbeispiel erläutert wurde (Figuren 1, 2 und 4).

Es kann in den weiteren Ausführbeispielen vorgesehen sein, dass die Außendichtung 36 mit dem Grundkörper 24 des Stopfens 1 und/oder mit dem Gehäuse 11, insbesondere mit der Schutzhülse 15 und/oder dem gehäusekörperfernen Endabschnitt 151 der Schutzhülse 15, stoffschlüssig verbunden ist, insbesondere verschmolzen ist, insbesondere durch Anschmelzen des für die die Außendichtung 36 vorgesehenen Materials.

Alternativ kann in den weiteren Ausführbeispielen aber auch vorgesehen sein, dass die Außendichtung 36 mit dem Grundkörper 24 des Stopfens 1 und/oder mit dem Gehäuse 11, insbesondere mit der Schutzhülse 15 und/oder dem gehäusekörperfernen Endabschnitt 151 der Schutzhülse 15 nicht stoffschlüssig verbunden ist, sondern dass die Außendichtung 36 mit dem Grundkörper 24 des Stopfens 1 und/oder mit dem Gehäuse 11, insbesondere mit der Schutzhülse 15 und/oder dem gehäusekörperfernen Endabschnitt 151 der Schutzhülse 15, lediglich, insbesondere kraftschlüssig, festgelegt ist. In diesem Fall ist es jedoch insbesondere bevorzugt, dass die Außendichtung 36 mit dem Grundkörper 24 des Stopfens 1 und/oder mit dem Gehäuse 11, insbesondere mit der Schutzhülse 15 und/oder dem gehäusekörperfernen Endabschnitt 151 der Schutzhülse 15 stoffschlüssig miteinander verbindbar, insbesondere verschweißbar, sind.

Ein Ausführungsbeispiel des erfindungsgemäßen Verfahrens zum Herstellen eines Abgassensors 2 sieht vor, dass ein Grundkörper 24, der Polytetrafluorethylen aufweist und der mindestens einen axialer Durchgangskanal 25 aufweist, bereitgestellt wird, dass ein Anschlusskabel, das radial außen ein Dichtmaterial, beispielsweise in Form einer 150µm dicken Folie, aufweist, das mindestens ein Perfluoralkoxypolymer oder ein Tetrafluorethylenperfluorproylen oder ein Polychlortriflourethylen oder ein Polyvinylidenflourid aufweist, durch den Durchgangskanal 25 hindurchgeführt wird. Ferner ist vorgesehen, dass dieser Verbund aus Grundkörper 24 und Anschlusskabel 21 zusammen mit einem Außendichtungsmaterial, beispielsweise einer 150µm dicken Folie, das mindestens ein Perfluoralkoxypolymer oder ein Tetrafluorethylenperfluorproylen oder ein Polychlortriflourethylen oder ein Polyvinylidenflourid aufweist, im Inneren eines Gehäuses 11 angeordnet wird, sodass Außendichtmaterial zwischen Grundkörper 24 und Gehäuse 11 angeordnet ist. In diesem Beispiel ist vorgesehen, dass die Anordnung in einem gehäusekörperfernen Endabschnitt 151 einer Schutzhülse 15 erfolgt, die mit einem Gehäusekörper 12 zu einem Gehäuse 11 montierbar ist.

Es ist insbesondere vorgesehen, dass durch Verstemmen und Erhitzen des Verbundes aus Anschlusskabel 21, Dichtmaterial, Grundkörper 24, Außendichtmaterial und Gehäuse 11 bzw. Schutzhülse 15 eine, insbesondere insgesamt, stoffschlüssige Abdichtung des Gehäuses 11 bzw. der Schutzhülse 15 geschaffen wird. Insbesondere kommt es zu einem Verschmelzen durch Aufschmelzen des Dichtmaterials und des Außendichtmaterials.

Im Beispiel erfolgt das Verstemmen mit einem angelegten Druck von 700 bis 2000 N/cm^2. Das Erhitzen des Verbundes aus Anschlusskabel 21, Dichtmaterial, Grundkörper 24, Außendichtmaterial, und Gehäuse 11 erfolgt vorzugsweise über einen Zeitraum von 10s oder mehr, vorzugsweise 30s oder mehr, damit ein Aufschmelzen des Dichtmaterials bzw. des Außendichtmaterial zuverlässig erfolgt.

Es ist ferner in diesem Beispiel vorgesehen, dass das Erhitzen bis zu einer Temperatur erfolgt, die über der Schmelztemperatur des Dichtmaterials, bzw. des Außendichtmaterial erfolgt, also beispielsweise über 280°C für Perfluoralkoxypolymer (PFA), über 240°C für Tetrafluorethylenperfluorproylen (FEP), über 190°C für Polychlortriflourethylen (PCTFE), über 170°C für Polyvinylidenflourid (PVDF), sodass ein Aufschmelzen des Dichtmaterials bzw. des Außendichtmaterial zuverlässig erfolgt. Ein besonderes Augenmerk ist bei der Erhitzung darauf zu richten, dass das Erhitzen so geschieht, dass die Temperatur des Grundkörpers 327°C nicht überschreitet. Auf diese Weise werden eine chemische Zersetzung des Grundkörpers und damit eine, insbesondere irreversible, Schädigung des Stopfens 1, sicher vermieden.

## Patentansprüche

1. Abgassensor umfassend ein Gehäuse (11), mindestens ein Anschlusskabel (21) und einen in dem Gehäuse (11) angeordneten Stopfen (1) zur Abdichtung des Gehäuses (11) des Abgassensor (2), wobei der Stopfen (1) einen Grundkörper (24) und eine Außendichtung (36,38) aufweist, wobei der Grundkörper (24) Polytetrafluorethylen aufweist, wobei der Stopfen (1) mindestens einen Durchgangskanal (25) aufweist, durch den das Anschlusskabel (21) hindurchführbar ist, wobei zwischen dem Grundkörper (24) des Stopfens (1) und dem Durchgangskanal (25) zumindest stellenweise eine Dichtung (26, 28) angeordnet ist,
**dadurch gekennzeichnet,**
**dass** das Gehäuse (11) des Abgassensors (2) mit dem Stopfen (1) mittelbar über eine Außendichtung (36, 38), die radial außen am Grundkörper (24) angeordnet ist, stoffschlüssig verbunden ist und die Dichtung mindestens ein Perfluoralkoxypolymer oder ein Tetrafluorethylenperfluorpropylen oder ein Polychlortrifluorethylen oder ein Polyvinylidenfluorid aufweist.

2. Abgassensor nach Anspruch 1, **dadurch gekennzeichnet, dass** der Grundkörper (24) mit der Dichtung (26, 28) stoffschlüssig verbunden ist.

3. Abgassensor nach Anspruch 1 oder 2, **dadurch gekennzeichnet, dass** die Dichtung (26, 28) auf dem Grundkörper (24) in Form einer zum Durchgangskanal (25) weisenden Schicht angeordnet ist, mit einer Schichtdicke von 10µm bis 1mm, vorzugsweise mit einer Schichtdicke von 50µm bis 250µm.

4. Abgassensor nach einem der vorangehenden Ansprüche, **dadurch gekennzeichnet, dass** das Anschlusskabel (21) mit der Dichtung (26, 28) stoffschlüssig verbunden ist.

5. Abgassensor nach einem der vorangehenden Ansprüche, **dadurch gekennzeichnet, dass** das Anschlusskabel (21) einen elektrischen Leiter (20) aufweist, der von einer Isolation (19) umgeben ist, die insbesondere ein Fluorpolymer, zum Beispiel Polytetrafluorethylen, aufweist.

6. Abgassensor nach einem der vorangehenden Ansprüche, **dadurch gekennzeichnet, dass** das Anschlusskabel (21), der Stopfen (1) und das Gehäuse (2) jeweils zumindest mittelbar stoffschlüssig miteinander verbunden sind.

7. Verfahren zur Herstellung eines Abgassensors nach einem der Ansprüche 1 - 6, mit folgenden Verfahrensschritte:
- Bereitstellen eines Grundkörpers (24), der Polytetrafluorethylen aufweist, wobei der Grundkörper (24) mindestens einen Durchgangskanal (25) aufweist,
- Bereitstellen eines Anschlusskabels (21), das radial außen ein Dichtmaterial aufweist, das mindestens ein Perfluoralkoxypolymer oder ein Tetrafluorethylenperfluorproylen oder ein Polychlortrifluoethylen oder ein Polyvinylidenflourid aufweist,
- Hindurchführen des Anschlusskabels (21) durch den Durchgangskanal (25) des Grundkörpers (24), sodass das Dichtmaterial in den Durchgangskanal (25) gelangt,
- Erhitzen des Verbundes aus Grundkörper (24), Dichtmaterial und Anschlusskabel (21),
- Montage des Verbundes aus Grundkörper (24), Dichtmaterial und Anschlusskabel (21), sodass er das Gehäuse (11) eines Abgassensors (2) abdichtet.

8. Verfahren nach Anspruch 7, **dadurch gekennzeichnet, dass** das Anschlusskabel (21) das Dichtmaterial radial außen in Form mindestens eines Schlauches und/oder mindestens einer Folie und/oder mindestens eines Ringes aufweist.

9. Verfahren nach einem der Ansprüche 7 oder 8, **dadurch gekennzeichnet, dass** ein Verstemmen durch einen von außen angelegten Druck von 700 bis 2000 N/cm^2 erfolgt.

10. Verfahren nach einem der Ansprüche 7 bis 9, **dadurch gekennzeichnet, dass** das Erhitzen so geschieht, dass das Dichtmaterial zumindest teilweise aufschmilzt und sich eine zumindest mittelbar stoffschlüssige Verbindung zwischen Grundkörper (24), Dichtmaterial und Anschlusskabel (21) ausbildet.

11. Verfahren nach einem der Ansprüche 7 bis 10, **dadurch gekennzeichnet, dass** das Erhitzen so geschieht, dass die Temperatur des Grundkörpers (24) 327°C nicht überschreitet.

## Claims

1. Exhaust gas sensor, comprising a housing (11), at least one connection cable (21) and a stopper (1), which is arranged in the housing (11) and is intended for sealing off the housing (11) of the exhaust gas sensor (2), wherein the stopper (1) has a main body (24) and an outer seal (36, 38), wherein the main body (24) comprises polytetrafluoroethylene, wherein the stopper (1) has at least one through-channel (25), through which the connection cable (21) can be led, wherein a seal (26, 28) is arranged at least in places between the main body (24) of the stopper (1) and the through-channel (25),
**characterized**
**in that** the housing (11) of the exhaust gas sensor (2) is connected in a material-bonding manner to the stopper (1) indirectly by way of an outer seal (36, 38), which is arranged radially outside on the main body (24), and the seal comprises at least a perfluoroalkoxy polymer or a tetrafluoroethylene perfluoroproylene or a polychlorotrifluoroethylene or a polyvinylidene fluoride.

2. Exhaust gas sensor according to Claim 1, **characterized in that** the main body (24) is connected in a material-bonding manner to the seal (26, 28).

3. Exhaust gas sensor according to Claim 1 or 2, **characterized in that** the seal (26, 28) is arranged on the main body (24) in the form of a layer facing the through-channel (25), with a layer thickness of 10 µm to 1 mm, preferably with a layer thickness of 50 µm to 250 µm.

4. Exhaust gas sensor according to one of the preceding claims, **characterized in that** the connection cable (21) is connected in a material-bonding manner to the seal (26, 28).

5. Exhaust gas sensor according to one of the preceding claims, **characterized in that** the connection cable (21) has an electrical conductor (20), which is surrounded by an insulation (19), which comprises in particular a fluoropolymer, for example polytetrafluoroethylene.

6. Exhaust gas sensor according to one of the preceding claims, **characterized in that** the connection cable (21), the stopper (1) and the housing (2) are in each case at least indirectly connected to one another in a material-bonding manner.

7. Method for producing an exhaust gas sensor according to one of Claims 1-6, with the following steps:
- providing a main body (24), which comprises polytetrafluoroethylene, wherein the main body (24) has at least one through-channel (25),
- providing a connection cable (21), which has radially on the outside a sealing material which comprises at least a perfluoroalkoxy polymer or a tetrafluoroethylene perfluoroproylene or a polychlorotrifluoroethylene or a polyvinylidene fluoride,
- leading the connection cable (21) through the through-channel (25) of the main body (24), so that the sealing material enters the through-channel (25),
- heating the assembly made up of the main body (24), the sealing material and the connection cable (21),
- fitting the assembly made up of the main body (24), the sealing material and the connection cable (21), so that it seals off the housing (11) of an exhaust gas sensor (2).

8. Method according to Claim 7, **characterized in that** the connection cable (21) has the sealing material radially on the outside in the form of at least one tube and/or at least one film and/or at least one ring.

9. Method according to either of Claims 7 and 8, **characterized in that** caulking is performed by an externally applied pressure of 700 to 2000 N/cm².

10. Method according to one of Claims 7 to 9, **characterized in that** the heating takes place in such a way that the sealing material at least partially melts and forms an at least indirectly material-bonding connection between the main body (24), the sealing material and the connection cable (21).

11. Method according to one of Claims 7 to 10, **characterized in that** the heating takes place in such a way that the temperature of the main body (24) does not exceed 327° C.

## Revendications

1. Capteur de gaz d'échappement comprenant un boîtier (11), au moins un câble de raccordement (21) et un bouchon (1) disposé dans le boîtier (11) pour obturer le boîtier (11) du capteur de gaz d'échappement (2), dans lequel le bouchon (1) présente un corps de base (24) et un joint d'étanchéité extérieur (36, 38), dans lequel le corps de base (24) présente du polytétrafluoroéthylène, dans lequel le bouchon (1) présente au moins un canal de passage (25) à travers lequel le câble de raccordement (21) peut être introduit, dans lequel un joint d'étanchéité (26, 28) est disposé au moins localement entre le corps de base (24) du bouchon (1) et le canal de passage (25), **caractérisé en ce que** le boîtier (11) du capteur de gaz d'échappement (2) est assemblé matériellement avec le bouchon (1) indirectement au moyen d'un joint d'étanchéité extérieur (36, 38), qui est disposé radialement à l'extérieur sur le corps de base (24) et le joint d'étanchéité présente un polymère perfluoroalcoxy ou un tétrafluoroéthylène perfluoro propylène ou un polychlorotrifluoroéthylène ou un fluorure de polyvinylidène.

2. Capteur de gaz d'échappement selon la revendication 1, **caractérisé en ce que** le corps de base (24) est assemblé matériellement avec le joint d'étanchéité (26, 28).

3. Capteur de gaz d'échappement selon la revendication 1 ou 2, **caractérisé en ce que** le joint d'étanchéité (26, 28) est disposé sur le corps de base (24) sous la forme d'une couche orientée vers le canal de passage (25), avec une épaisseur de couche de 10 µm à 1 mm, de préférence avec une épaisseur de couche de 50 µm à 250 µm.

4. Capteur de gaz d'échappement selon l'une quelconque des revendications précédentes, **caractérisé en ce que** le câble de raccordement (21) est assemblé matériellement avec le joint d'étanchéité (26, 28).

5. Capteur de gaz d'échappement selon l'une quelconque des revendications précédentes, **caractérisé en ce que** le câble de raccordement (21) présente un conducteur électrique (20), qui est entouré d'un isolant (19), qui présente en particulier un fluoropolymère, par exemple du polytétrafluoroéthylène.

6. Capteur de gaz d'échappement selon l'une quelconque des revendications précédentes, **caractérisé en ce que** le câble de raccordement (21), le bouchon (1) et le boîtier (2) sont assemblés matériellement les uns aux autres, respectivement au moins indirectement.

7. Procédé de fabrication d'un capteur de gaz d'échappement selon l'une quelconque des revendications 1 à 6, présentant les étapes de procédé suivantes:
- préparer un corps de base (24), qui présente du polytétrafluoroéthylène, dans lequel le corps de base (24) présente au moins un canal de passage (25),
- préparer un câble de raccordement (21), qui présente radialement à l'extérieur un matériau d'étanchéité, qui présente au moins un polymère perfluoroalcoxy ou un tétrafluoroéthylène perfluoro propylène ou un polychlorotrifluoroéthylène ou un fluorure de polyvinylidène,
- introduire le câble de raccordement (21) à travers le canal de passage (25) du corps de base (24), de telle manière que le matériau d'étanchéité arrive dans le canal de passage (25),
- chauffer le composite constitué du corps de base (24), du matériau d'étanchéité et du câble de raccordement (21),
- monter le composite constitué du corps de base (24), du matériau d'étanchéité et du câble de raccordement (21), de telle manière qu'il obture le boîtier (11) d'un capteur de gaz d'échappement (2).

8. Procédé selon la revendication 7, **caractérisé en ce que** le câble de raccordement (21) présente le matériau d'étanchéité radialement à l'extérieur sous la forme d'au moins un tuyau souple et/ou d'au moins une feuille et/ou d'au moins une bague.

9. Procédé selon une de revendications 7 ou 8, **caractérisé en ce que** l'on effectue un écrasement au moyen d'une pression de 700 à 2000 N/cm² appliquée de l'extérieur.

10. Procédé selon l'une quelconque des revendications 7 à 9, **caractérisé en ce que** le chauffage est effectué de telle manière que le matériau d'étanchéité fonde au moins en partie et qu'il se forme un assemblage au moins indirectement matériel entre le corps de base (24), le matériau d'étanchéité et le câble de raccordement (21).

11. Procédé selon l'une quelconque des revendications 7 à 10, **caractérisé en ce que** le chauffage est effectué de telle manière que la température du corps de base (24) ne dépasse pas 327°C.
